# EUROPEAN PATENT APPLICATION

(11) **EP 4 331 355 A1**
(43) Date of publication of application: **06.03.2024**
(21) Application number: 22898866.3
(22) Date of filing: 27.10.2022
(51) Int. Cl.: A01M 1/10, A01M 1/02

(54) **WASP CAPTURE DEVICE**

(30) Priority: 24.11.2021 KR 20210163783
(71) Applicant: Jeong, Hyuk, Gwangju 61498 (KR)
(72) Inventor: Jeong, Hyuk, Gwangju 61498 (KR)
(74) Representative: Stolmár & Partner Patentanwälte PartG mbB
(86) International application number: PCT/KR2022/016524
(87) International publication number: WO 2023/096184

(57) **Abstract**

The present disclosure relates to a wasp catcher, and more particularly, to a wasp catcher that can isolate only wasps using a trap structure on a front surface of a hive without using an attractant and can easily separate and remove only caught and isolated wasps or killed wasps. The present disclosure provides a wasp catcher detachably attached to a hive and not using an attractant. The wasp catcher can guide wasps to move to a second catching portion through a first catching portion using flight straightness and phototaxis of the wasps and can allow bees moved to the second catching portion to exit the second catching portion, thereby catching and isolating only the wasps in the second catching portion.

## Description

### [Technical Field]

The present disclosure relates to a wasp catcher, and more particularly, to a wasp catcher that can isolate only wasps using a trap structure on a front surface of a hive without using an attractant and can easily separate and remove only caught and isolated wasps or killed wasps.

### [Background Art]

Wasps appearing in apiaries and attacking bees are causing great damage to beekeepers. Wasps colonize for about 90 days each year between August and September, during which time thousands of swarms of wasps appear in the apiary to hunt bees. Even when wasps approach and attack a hive for only a few hours, the hive's bees are disturbed and die within a few days. In order to protect the bees from the wasps, beekeepers try to reduce damage by putting a net around the hive or putting a sticky tape around the hive to catch the wasps, but these methods have limitations in preventing the damage caused by the wasps, and thus research on wasp catching devices has been continued.

In the case of existing wasp catching devices, it is common to catch wasps by filling a structure with an attractant using an enzyme or the like, but this is a method of attracting not only wasps but also various insects around the apiary and trapping them inside the catching device to starve. In this case, the majority of wasps attracted by the attractant are wasps nearing the end of their lifespan, and thus an effect of reducing the number of wasps is insignificant. There is also an environmental problem in that not only wasps but also various insects including bees are killed.

Also, the time it takes for wasps to starve to death is not short, and even in a case in which wasps are killed immediately, the isolated and killed wasps are located in the same space as bees or are located close to the bees, and there is a problem that the bees get stressed due to not recognizing that the wasps are isolated. Further, in the case of a structure in which an existing wasp catching device is attached to a hive, there is a problem that other tools and materials that should be installed at an entrance to the hive cannot be installed at the same time.

The related art of the existing wasp catching device described above includes Korean Utility Model Registration No. 20-0446750 (Title of Disclosure: Wasp catching device in which attractant is provided inside catching net).

### [Detailed Description of the Invention]

### [Technical Problem]

The present disclosure is directed to providing a wasp catcher detachably attached to a hive and not using an attractant, the wasp catcher capable of guiding wasps to move to a second catching portion through a first catching portion using flight straightness and phototaxis of the wasps and capable of allowing bees moved to the second catching portion to exit the second catching portion, thereby catching and isolating only the wasps in the second catching portion.

The present disclosure is also directed to providing a wasp catcher in which a first catching portion and a second catching portion are configured to be attachable to and detachable from each other so that, in a process of removing wasps caught and isolated or killed in the second catching portion, only the second catching portion is separated from the first catching portion to remove the wasps caught and isolated or killed in the second catching portion without the need to remove the entire wasp catching device from a hive as with the existing wasp catching device, and in which the second catching portion from which the wasps are removed is allowed to be conveniently attached to the first catching portion so that only the wasps caught in the second catching portion are easily removed while a movement path for bees and wasps through the first catching portion is maintained.

The present disclosure is also directed to providing a wasp catcher in which a slit through which only bees are able to pass is formed in a filter portion disposed inside a first catching portion to, while movement of wasps to a hive is blocked, allow movement of the bees and pollen stuck to the bees to the hive, thus being able to collect the moved pollen in a separate pollen collector through a lower portion of the first catching portion and gather the collected pollen while the wasps are blocked.

### [Technical Solution]

A wasp catcher according to the present disclosure which is attached to one side surface of a hive where a small gate is formed, thus allowing passage of bees toward the small gate and guiding wasps toward one side to catch the wasps, the wasp catcher including: a first catching portion in which a front entry/exit through which the bees and the wasps are able to enter and exit is formed at one side, a rear entry/exit through which entry to and exit from the small gate of the hive are possible is formed at the other side, and a first guide hole configured to guide the wasps upward is formed in an upper surface; and a second catching portion which is attached to an upper portion of the first catching portion, has a catching space formed therein, has a second guide hole communicating with the first guide hole formed in a lower surface corresponding to the first guide hole, and has a guide body, which extends upward in a cylindrical shape from an edge of the second guide hole to guide the wasps to the catching space and has a plurality of wasp passage slits through which the wasps are able to pass formed in an outer circumferential surface, provided therein.

The first catching portion and the second catching portion of the wasp catcher according to an embodiment of the present disclosure may be formed to be attachable to and detachable from each other.

The guide body of the wasp catcher according to an embodiment of the present disclosure may be formed to gradually narrow upward.

The first catching portion of the wasp catcher according to an embodiment of the present disclosure may further include a filter portion installed between the front entry/exit and the rear entry/exit to allow passage of the bees moving from the front entry/exit to the rear entry/exit and block the wasps.

A plurality of bee passage holes having a size that allows the bees to pass through and pollen stuck to the bees to be blocked are formed in the filter portion of the wasp catcher according to an embodiment of the present disclosure.

A plurality of first bee passage slits through which the bees are able to pass may be formed in at least any one surface of the first catching portion of the wasp catcher according to an embodiment of the present disclosure.

A plurality of second bee passage slits through which the bees are able to pass may be formed in at least any one surface of the second catching portion of the wasp catcher according to an embodiment of the present disclosure.

A plurality of pollen passage slits having a size that blocks movement of the bees and allows passage of only the pollen separated from the bees may be formed in a lower surface of the first catching portion of the wasp catcher according to an embodiment of the present disclosure.

A plurality of ventilation slits having a size that does not allow movement of the bees may be formed in a side surface of the first catching portion of the wasp catcher according to an embodiment of the present disclosure.

An upper surface of the second catching portion of the wasp catcher according to an embodiment of the present disclosure may be formed of a transparent material.

The second catching portion of the wasp catcher according to an embodiment of the present disclosure may further include a killing portion configured to kill the wasps.

### [Advantageous Effects]

The present disclosure provides a wasp catcher detachably attached to a hive and not using an attractant. The wasp catcher can guide wasps to move to a second catching portion through a first catching portion using flight straightness and phototaxis of the wasps and can allow bees moved to the second catching portion to exit the second catching portion, thereby catching and isolating only the wasps in the second catching portion.

Also, in the wasp catcher according to the present disclosure, the first catching portion and the second catching portion are configured to be attachable to and detachable from each other so that, in a process of removing wasps caught and isolated or killed in the second catching portion, only the second catching portion is separated from the first catching portion to remove the wasps caught and isolated or killed in the second catching portion without the need to remove the entire wasp catching device from a hive as with the existing wasp catching device, and the second catching portion from which the wasps are removed is allowed to be conveniently attached to the first catching portion so that only the wasps caught in the second catching portion are easily removed while a movement path for bees and wasps through the first catching portion is maintained.

In addition, in the wasp catcher according to the present disclosure, a slit through which only bees are able to pass is formed in a filter portion disposed inside the first catching portion to, while movement of wasps to a hive is blocked, allow movement of the bees and pollen stuck to the bees to the hive, thus being able to collect the moved pollen in a separate pollen collector through a lower portion of the first catching portion and gather the collected pollen while the wasps are blocked.

### [Brief Description of Drawings]

FIG. 1 is a perspective view illustrating a state in which a wasp catcher is installed on a hive according to an embodiment of the present disclosure;
FIG. 2 is an exploded perspective view illustrating a state in which the wasp catcher is separated from the hive according to an embodiment of the present disclosure;
FIG. 3 is an exploded perspective view illustrating a state in which the wasp catcher is separated into a first catching portion and a second catching portion according to an embodiment of the present disclosure;
FIG. 4 is an exploded perspective view illustrating a state in which the wasp catcher is separated into a first catching portion and a second catching portion according to an embodiment of the present disclosure;
FIG. 5 is an exploded perspective view illustrating a state in which the wasp catcher is separated into a first catching portion and a second catching portion according to an embodiment of the present disclosure;
FIG. 6 is a front view of the wasp catcher according to an embodiment of the present disclosure;
FIG. 7 is a side view of the wasp catcher according to an embodiment of the present disclosure; and
FIG. 8 is an exploded perspective view illustrating a state in which a wasp catcher further including a killing portion is separated into a first catching portion, a second catching portion, and the killing portion according to another embodiment of the present disclosure.

### [Best Mode]

Hereinafter, a wasp catcher according to exemplary embodiments of the present disclosure will be described in detail with reference to the accompanying drawings.

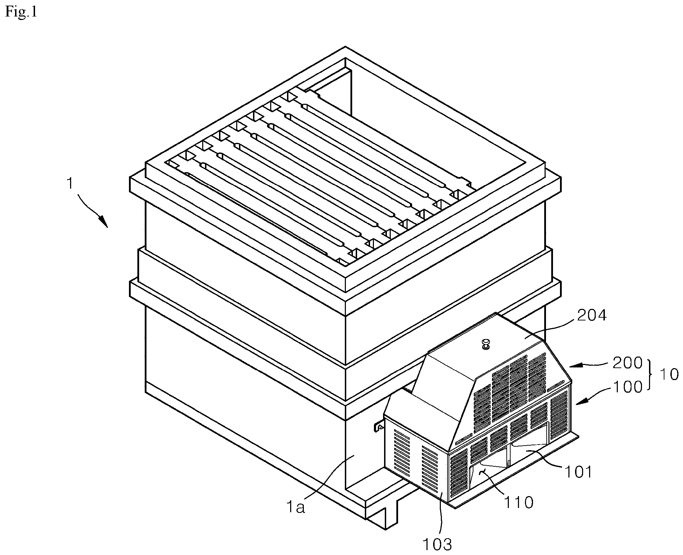

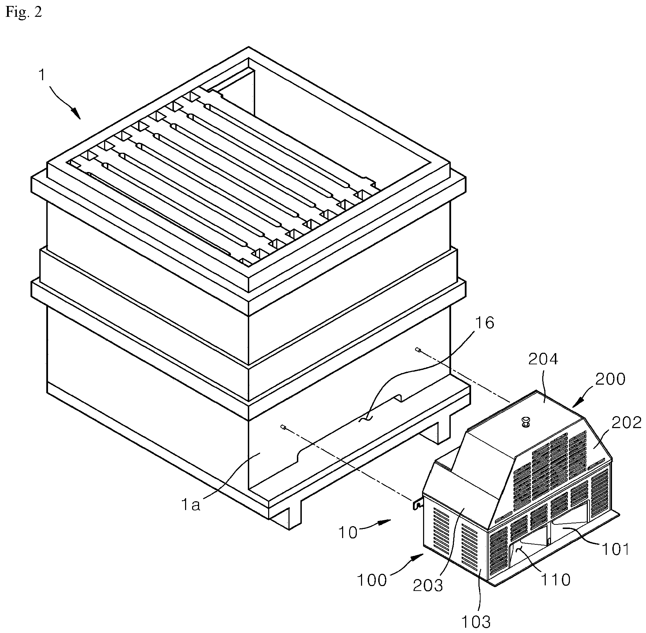

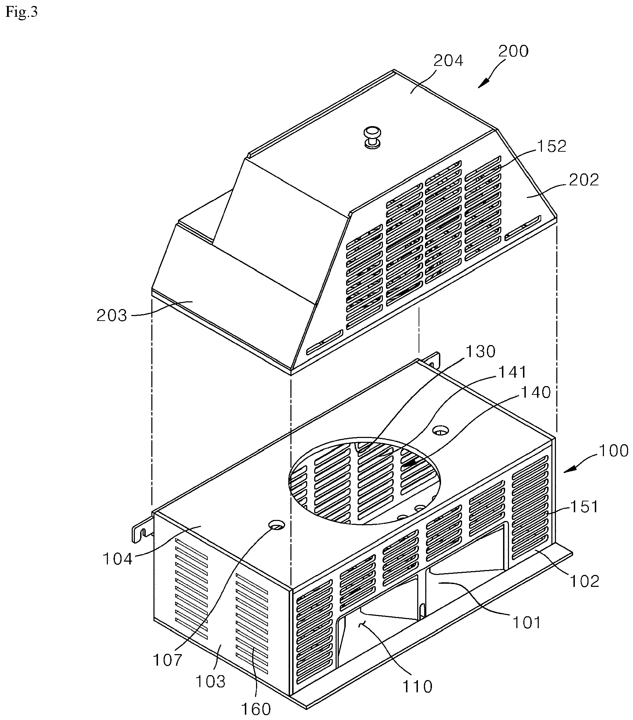

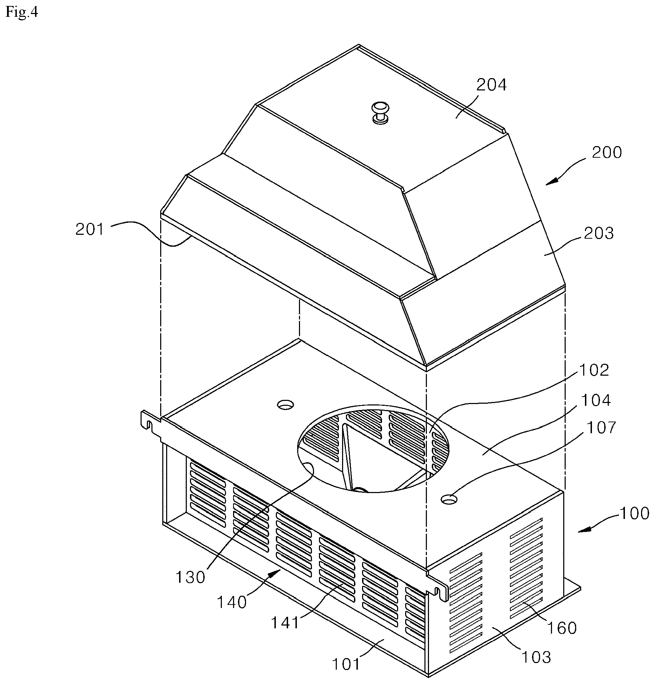

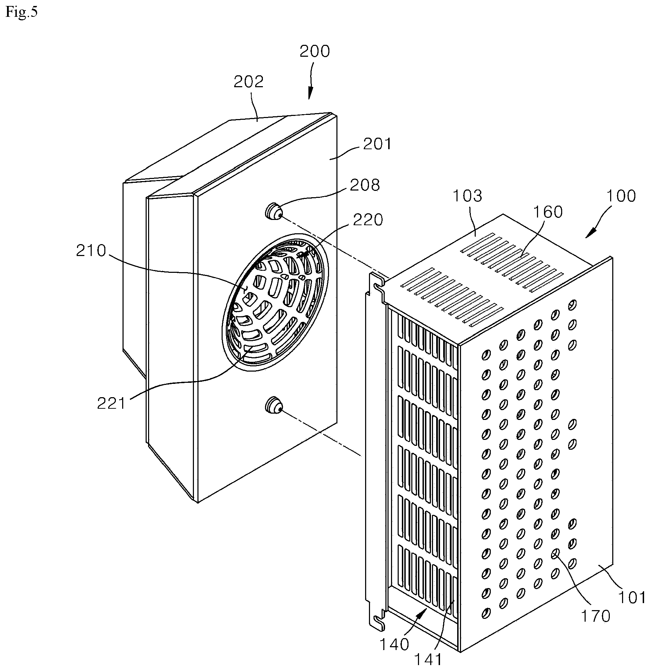

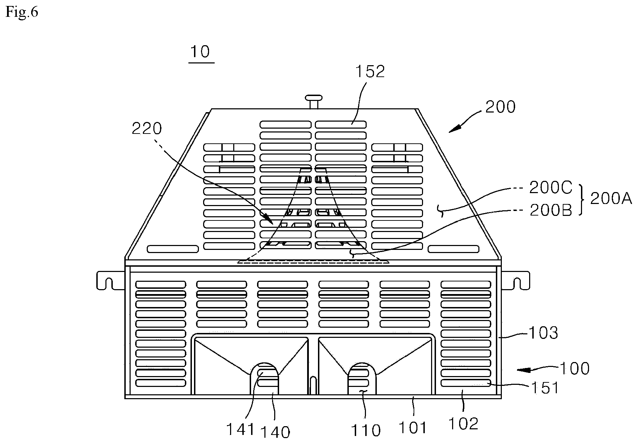

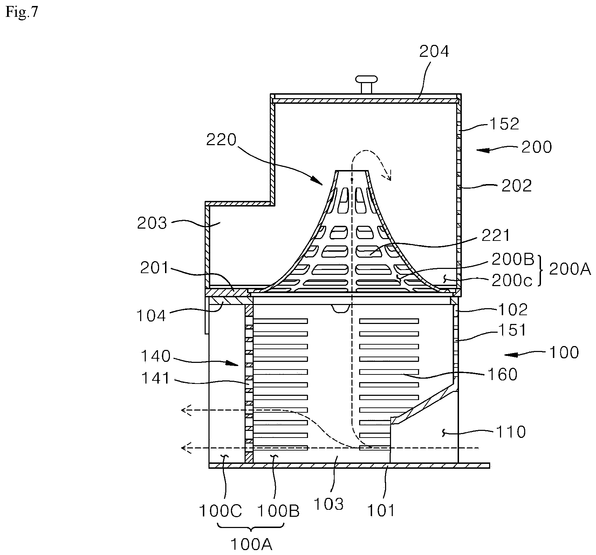

FIGS. 1 to 8 illustrate a wasp catcher 10 according to an embodiment of the present disclosure. Referring to FIGS. 1 to 8, the wasp catcher 10 according to an embodiment of the present disclosure is attached to one side surface of a hive 1 where a small gate 1b is formed, thus allowing passage of bees toward the small gate 1b and guiding wasps toward one side to catch the wasps.

The wasp catcher 10 according to an embodiment of the present disclosure may include a first catching portion 100 and a second catching portion 200.

The first catching portion 100 is formed to have a box structure in which a lower surface 101, a front surface 102, both side surfaces 103, and an upper surface 104 are closed and a rear surface is open.

In the first catching portion 100, a front entry/exit 110 through which bees and wasps are able to enter and exit is formed in the front surface 102 located at the front. A rear entry/exit 120 through which entry to and exit from the small gate 1b of the hive 1 are possible is formed at the rear of the first catching portion 100. In the present embodiment, a structure in which a rear surface is eliminated and the rear side is completely open to form the rear entry/exit 120 is applied to the first catching portion 100, but different from such a structure, a rear surface may be installed at the rear side of the first catching portion 100, and the rear entry/exit 120 may be formed in the rear surface.

A first guide hole 130 which is open to guide wasps entering the first catching portion 100 to an upper side where the second catching portion 200, which will be described below, is located is formed in the upper surface 104 of the first catching portion 100. The first guide hole 130 may form a circular shape as illustrated or may form a semicircular shape.

The first catching portion 100 of the wasp catcher 10 according to the present disclosure may further include a filter portion 140 installed between the front entry/exit 110 and the rear entry/exit 120 to guide movement of the wasps to the second catching portion 200.

The filter portion 140 is installed to stand upright between the front entry/exit 110 and the rear entry/exit 120 inside the first catching portion 100 so that an inner space 100A of the first catching portion 100 can be divided into a first space 110B in which both bees and wasps are present and a second space 100C in which only the bees are present.

The first space 110B is formed by the front surface 102, both side surfaces 103, lower surface 101, and upper surface 104 of the first catching portion 100 and one surface 1a of the filter portion 140, and the second space 100C is formed by the one side surface 1a where the small gate 1b of the hive 1 is formed, the lower surface 101, both side surfaces 103, and upper surface 104 of the first catching portion 100, and the other surface of the filter portion 140.

A plurality of bee passage holes 141 having a size that allows the bees and pollen stuck to the bees to move and pass together from the first space 110B to the second space 100C and does not allow the wasps to pass from the first space 110B to the second space 100C are formed in the filter portion 140. The filter portion 140 may allow passage of the bees moving from the front entry/exit 110 toward the rear entry/exit 120 and may block movement of the wasps from the front entry/exit 110 toward the rear entry/exit 120. Also, the wasps whose movement toward the rear entry/exit 120 is blocked by the filter portion 140 may move to the second catching portion 200 above the first catching portion 100 through the first guide hole 130. The wasps passing through the first guide hole 130 move into a catching space 200A along a guide body 220 disposed in the second catching portion 200 and are isolated in the second catching portion 200 through wasp passage slits 221 formed in the guide body 220.

A plurality of first bee passage slits 151 through which the bees are able to pass are formed in at least any one surface of the first catching portion 100. In the present embodiment, the first bee passage slits 151 are formed in the front surface 102 of the first catching portion 100.

Also, a plurality of ventilation slits 160 having a size that does not allow movement and passage of the bees are formed in both side surfaces 103 of the first catching portion 100 to control temperature and humidity of the inner space 100A of the first catching portion 100 and to allow ventilation and air circulation.

A plurality of pollen passage slits 170 having a size that blocks movement and passage of the bees and allows passage of only the pollen separated from the bees are formed in the lower surface 101 of the first catching portion 100. Also, although not illustrated in the drawings, a pollen collector configured to collect and gather the pollen passing through the pollen passage slits 170 may be further disposed at a lower portion of the first catching portion 100.

In a case in which pollen introduced into the first catching portion 100 while stuck to bees is separated from the bees, the pollen passage slits 170 allow the separated pollen to pass through the lower surface 101 of the first catching portion 100 and be collected in the pollen collector disposed at the lower portion of the first catching portion 100, and the pollen may be gathered by collecting the pollen collector.

Meanwhile, A plurality of bee passage holes 141 may having a size that allows the bees to pass through and pollen stuck to the bees to be blocked. The pollen stuck to bees is separated from the bees by the filter portion 140 while the bees pass through the filter portion 140. And the separated pollen is collected by the pollen collector disposed below the first catching portion 100. In this case, the pollen collection amount may be increased compared to the structure of the filter portion 140 in which a plurality of bee passage holes 141 are formed so that pollen can pass together with the bees.

The second catching portion 200 is attached to an upper portion of the first catching portion 100.

The second catching portion 200 is formed to be attachable to and detachable from the first catching portion 100. To this end, an attaching hole 107 is formed on an upper end of the first catching portion 100, and an attaching protrusion 208 into which the attaching hole 107 can be inserted to be attached is formed in a lower portion of the second catching portion 200.

This is a structure to minimize stress that bees experience due to not recognizing that wasps are isolated when the isolated and killed wasps are located in the same space as the bees or are located close to the bees as in the case of existing wasp catching devices.

Without the need to remove the entire wasp catcher 10 from the hive 1 in order to remove the wasps isolated and killed in the second catching portion 200, the second catching portion 200 may be separated from the first catching portion 100 to remove the wasps from the second catching portion 200. In this way, only the wasps caught in the second catching portion 200 may be easily removed while a movement path for bees and wasps through the first catching portion 100 is maintained. In particular, as soon as the wasps are isolated or killed, the second catching portion 200 may be separated from the first catching portion 100 immediately to minimize the stress that the bees experience.

The second catching portion 200 is formed to have a box structure which includes a lower surface 201, a front surface 202, both side surfaces 203, and an upper surface 204.

A second guide hole 210 communicating with the first guide hole 130 is formed in a lower surface 201 of the second catching portion 200 that comes in contact with or faces the upper surface 101 of the first catching portion 100 or corresponds to the first guide hole 130. The second guide hole 210 may form a circular or semicircular shape as the first guide hole 130.

The guide body 220 configured to guide the wasps passing through the first guide hole 130 to the catching space 200A inside the second catching portion 200 is disposed in the second catching portion 200.

The guide body 220 extends upward from an edge of the second guide hole 210 toward the catching space 200A.

The guide body 220 is formed in a cylindrical shape whose inner portion, upper portion, and lower portion are open. Wasps may move into the second catching portion 200 via the first guide hole 130 and the open inner portion of the guide body 220.

The guide body 220 is formed so that a space or a size through which the wasps can move gradually narrows toward the inside or the top of the catching space 200A of the second catching portion 200.

Also, a plurality of wasp passage slits 221 through which the wasps can pass are formed in an outer circumferential surface of the guide body 220 to allow the wasps passing through the second guide hole 210 to move to the catching space 200A of the second catching portion 200.

The guide body 220 divides the catching space 200A in the second catching portion 200 into a guide space 200B for guiding the wasps from the first catching portion 100 toward the second catching portion 200 and an isolation space 200C for isolating the wasps passing through the wasp passage slits 221 of the guide body 220 from the first catching portion 100.

The guide body 220 may have a conical or pyramidal shape, but the shape thereof is not limited thereto, and the wasps may move into the second catching portion 200 through passage slits or holes formed in the guide body 220.

The upper surface of the second catching portion 200 may be formed of a transparent material to guide the wasps to the second catching portion 200 disposed above the first catching portion 100 by using the wasps' habit such as flight straightness and phototaxis of the wasps. Wasps are extremely sensitive to light and have a habit of moving in the direction of light in response to light, and the wasp's upward flight is also due to the wasp's habit of moving in the direction of light. In order to use such a habit of wasps, the upper surface 204 of the second catching portion 200 may be made of a transparent material, such as acrylic through which light can pass, to guide the wasps to move toward the upper surface 204 of the second catching portion 200.

A plurality of second bee passage slits 152 through which the bees can pass are formed in at least any one surface of the second catching portion 200. In the present embodiment, the second bee passage slits 152 are formed in the front surface 202 of the second catching portion 200. The second bee passage slits 152 are formed to have a size that allows movement of bees but does not allow movement of wasps. The second bee passage slits 152 allow the bees to move away from the second catching portion 200 in a case in which the bees move to the second catching portion 200 through the first catching portion 100. In a case in which the bees which are moving or have moved to the second catching portion 200 are not able to move away from the second catching portion 200, the bees are isolated together with wasps or killed together with the wasps by a killing portion 300. Thus, the second bee passage slits 152 may be disposed in order to prevent such a problem.

A process of isolating wasps using the wasp catcher 10 according to the present disclosure is as follows.

Bees entering the first catching portion 100 through the front entry/exit 110 may pass through the filter portion 140 and enter the small gate 1b of the hive 1 through the rear entry/exit 120, and in this process, pollen stuck to the bees is collected at the bottom of the first catching portion 100 through the pollen passage slits 170 in a lower end of the first catching portion 100. Also, wasps may move to the filter portion 140 through the front entry/exit 110 but are not able to pass through bee passage holes of the filter portion 140. Due to a habit of moving in the direction of light, the wasps whose movement toward the rear entry/exit 120 is blocked pass through the first guide hole 130 provided in the upper surface 104 of the first catching portion 100 and the second guide hole 210 provided in the lower surface 201 of the second catching portion 200 disposed above the first catching portion 100 and move to the catching space 200A of the second catching portion 200 along the guide body 220 provided in the second catching portion 200. The wasps are finally isolated in the second catching portion 200 after passing through the wasp passage slits 221 of the guide body 220 and an upper opening of the guide body 220. Although the wasps entering the second catching portion 200 cannot exit the second catching portion 200, bees entering the second catching portion 200 may exit the second catching portion 200 through the second bee passage slits 152 disposed in the front surface of the second catching portion 200. Accordingly, only the wasps are isolated in the second catching portion 200.

Also, although not illustrated in the drawings, in the wasp catcher 10 according to one embodiment of the present disclosure, a small gate 1b opening/closing portion having a function of opening or closing the small gate 1b may be disposed on a boundary where the first catching portion 100 of the wasp catcher 10 is attached to the hive 1. While the existing wasp catching devices have an inconvenience that a separate small gate 1b opening/closing device should be installed at a hive 1, the wasp catcher 10 according to an embodiment of the present disclosure includes the small gate 1b opening/closing portion that serves to open or close the small gate 1b and thus does not require installing a separate small gate 1b opening/closing device as in the existing devices.

As described above, the wasp catcher 10 proposed herein is a wasp catcher 10 detachably attached to a hive 1 and not using an attractant and guides wasps to move to the second catching portion 200 through the first catching portion 100 by using flight straightness and phototaxis of the wasps. By allowing bees moved to the second catching portion 200 to exit the second catching portion 200 through the second bee passage slits 152, only the wasps may be isolated in the second catching portion 200.

Also, according to the wasp catcher 10 proposed herein, by applying a structure in which the first catching portion 100 and the second catching portion 200 are attachable to and detachable from each other, in a process of removing wasps isolated and killed in the second catching portion 200, only the second catching portion 200 is separated to remove the wasps without the need to remove the entire wasp catcher 10 from the hive 1 as with the existing wasp catching devices, and thus only the wasps caught in the second catching portion 200 may be easily removed while a movement path for bees and wasps through the first catching portion 100 is maintained.

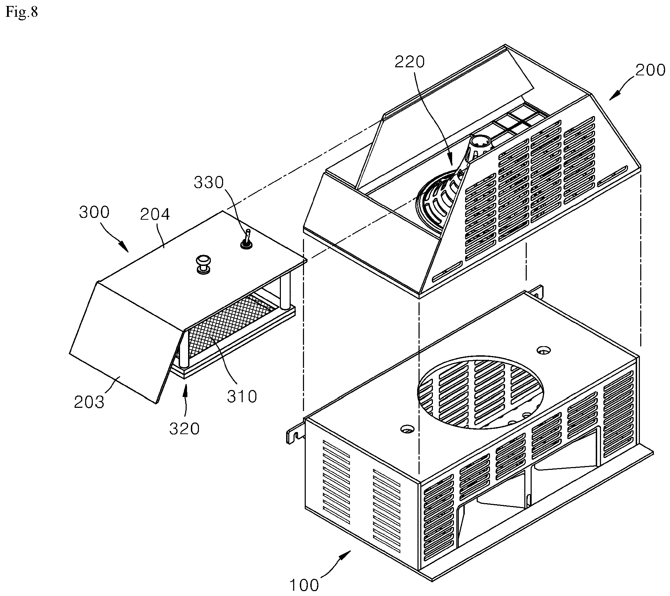

Meanwhile, as illustrated in FIG. 8, the wasp catcher 10 according to an embodiment of the present disclosure may further include the killing portion 300 installed in the second catching portion 200 to kill the wasps caught and isolated in the second catching portion 200.

Referring to FIG. 8, the killing portion 300 may include an electric shock net body 310 that has conductivity to allow current to flow therein, a plurality of support members 320 configured to support the electric shock net body 310, a power supply configured to supply power to the electric shock net body 310, and a switch 330 configured to turn on or off the operation of the power supply.

The support members 320 of the killing portion 300 are disposed so that one side is installed to be fixed to an inner side of the upper surface 204 of the second catching portion 200 and the other side faces the catching space 200A of the second catching portion 200. The electric shock net body 310 is installed on ends of the support members 320 to kill wasps by electric shock when wasps entering the catching space 200A come in contact with the electric shock net body 310.

The killing portion 300 may be configured to be attachable to and detachable from an upper side 204 of the second catching portion 200. A portion of the upper surface 204 of the second catching portion 200 where the killing portion 300 is installed and a portion of any one side surface 203 of both side surfaces 203 adjacent to the upper surface 204 of the second catching portion 200 are formed to be detachable from the second catching portion 200. The portion of the upper surface204 and the portion of the side surface 203 which are formed to be detachable from the second catching portion 200 are integrally formed or connected.

An attachment opening formed by the portion of the upper surface 204 and the portion of the side surface 203 being open when the killing portion 300 is separated may be formed in an upper portion of the second catching portion 200. By sliding the killing portion 300 along the attachment opening, the killing portion 300 may be attached to or detached from the second catching portion 200.

The portion of the upper surface 204 of the second catching portion 200 where the killing portion 300 is installed may be formed of a transparent material to use the wasps' habit such as flight straightness and phototaxis of the wasps, and an electric shock method may be used as a killing method of the killing portion 300 as described above, but the present disclosure is not limited thereto.

The wash catcher according to the present disclosure has been described above with reference to the accompanying drawings, but the above description is merely illustrative, and those of ordinary skill in the art should understand that various modifications and other equivalent embodiments are possible therefrom.

Therefore, the true technical scope of the present disclosure should be defined by the technical spirit of the appended claims.

## Claims

1. A wasp catcher which is attached to one side surface of a hive where a small gate is formed, thus allowing passage of bees toward the small gate and guiding wasps toward one side to catch the wasps, the wasp catcher comprising:
a first catching portion in which a front entry/exit through which the bees and the wasps are able to enter and exit is formed at one side, a rear entry/exit through which entry to and exit from the small gate of the hive are possible is formed at the other side, and a first guide hole configured to guide the wasps upward is formed in an upper surface; and
a second catching portion which is attached to an upper portion of the first catching portion, has a catching space formed therein, has a second guide hole communicating with the first guide hole formed in a lower surface corresponding to the first guide hole, and has a guide body, which extends upward in a cylindrical shape from an edge of the second guide hole to guide the wasps to the catching space and has a plurality of wasp passage slits through which the wasps are able to pass formed in an outer circumferential surface, provided therein.

2. The wasp catcher of claim 1, wherein the first catching portion and the second catching portion are formed to be attachable to and detachable from each other.

3. The wasp catcher of claim 1, wherein the guide body is formed to gradually narrow upward.

4. The wasp catcher of claim 1, wherein the first catching portion further includes a filter portion installed between the front entry/exit and the rear entry/exit to allow passage of the bees moving from the front entry/exit to the rear entry/exit and block the wasps.

5. The wasp catcher of claim 4, wherein a plurality of bee passage holes having a size that allows the bees to pass through and pollen stuck to the bees to be blocked are formed in the filter portion.

6. The wasp catcher of claim 1, wherein a plurality of first bee passage slits through which the bees are able to pass are formed in at least any one surface of the first catching portion.

7. The wasp catcher of claim 1, wherein a plurality of second bee passage slits through which the bees are able to pass are formed in at least any one surface of the second catching portion.

8. The wasp catcher of claim 1, wherein a plurality of pollen passage slits having a size that blocks movement of the bees and allows passage of only the pollen separated from the bees are formed in a lower surface of the first catching portion.

9. The wasp catcher of claim 1, wherein a plurality of ventilation slits having a size that does not allow movement of the bees are formed in a side surface of the first catching portion.

10. The wasp catcher of claim 1, wherein an upper surface of the second catching portion is formed of a transparent material.

11. The wasp catcher of claim 1, wherein the second catching portion further includes a killing portion configured to kill the wasps.
